# EUROPÄISCHE PATENTSCHRIFT

(11) **EP 4 130 530 B1**
(45) Veröffentlichungstag und Bekanntmachung des Hinweises auf die Patenterteilung: **25.12.2024**
(21) Anmeldenummer: 22185391.4
(22) Anmeldetag: 18.07.2022
(51) Int. Cl.: F16K 7/06

(54) **VENTILKÖRPER UND PROZESSVENTIL**
VALVE BODY AND PROCESS VALVE
CORPS DE SOUPAPE ET SOUPAPE DE PROCESSUS

(30) Priorität: 03.08.2021 DE 102021120124
(43) Veröffentlichungstag der Anmeldung: 08.02.2023
(73) Patentinhaber: GEMÜ Gebr. Müller Apparatebau GmbH & Co. Kommanditgesellschaft, 74653 Ingelfingen (DE)
(72) Erfinder: Barghoorn, Maximilian, 74523 Schwäbisch Hall (DE); Baumgärtner, Michael, 74677 Dörzbach (DE); Dasbach, Christian, 74081 Heilbronn (DE)
(74) Vertreter: DREISS Patentanwälte PartG mbB

(56) Entgegenhaltungen:
- WO-A1-2005/052419
- CH-A- 368 352
- JP-A- S59 166 768

## Beschreibung

Die Erfindung betrifft Fortschritte im Bereich der Prozessventiltechnik.

Aus der JP S59 166 768 A ist ein Ventilkörper mit einer Trennwand bekannt. Aus der CH 368 352 A ist ein Prozessventil mit einem Kompressor bekannt.

Die Probleme des Standes der Technik werden durch einen Ventilkörper gemäß dem Anspruch 1 sowie durch ein Prozessventil gemäß einem weiteren Anspruch gelöst.

Gemäß einem ersten Aspekt der Beschreibung wird ein Ventilkörper für ein Prozessventil bereitgestellt, wobei ein Innenraum des Ventilkörpers wenigstens zwei Anschlüsse fluidführend miteinander verbindet, wobei wenigstens eine Trennwand benachbarte Durchflusskammern des Innenraums voneinander separiert, und wobei eine Außenhülle und die wenigstens eine Trennwand zumindest in einem sich im Wesentlichen lotrecht zur einer Absperrachse erstreckenden Absperrabschnitt des Ventilkörpers aus einem flexiblen Material gefertigt sind.

Es sich zeichnet sich ferner dadurch aus, dass die wenigstens eine Trennwand sich in einem Längsschnitt, in dem die Absperrachse liegt, ausgehend vom Absperrabschnitt zumindest abschnittsweise verjüngt.

Die Durchflusskammern erlauben eine Auftrennung des Stroms des Prozessfluids. Ein auf den Absperrabschnitt wirkender Kompressor komprimiert den Ventilkörper. Durch die Aufteilung in mehrere Durchflusskammern wird ein Absperren bzw. Verschließen des Ventilkörpers durch die Komprimierung verbessert, da die mehreren Durchflusskammern im Gegensatz zu einer einzigen Durchflusskammer kontrollierter geschlossen werden können. Durch die eingebrachten Durchflusskammern wird darüberhinausgehend die Stauchung des gesamten Ventilkörpers reduziert. Die Lebensdauer des Ventilkörpers wird somit durch die Aufteilung in Durchflusskammern erhöht.

Vorteilhaft kann das mit dem Ventilkörper bereitgestellte Prozessventil ein Schlauchquetschventil ersetzen.

Ein vorteilhaftes Beispiel zeichnet sich dadurch aus, dass der Ventilkörper einstückig aus dem flexiblen Material, insbesondere einem Elastomer, gefertigt ist.

Die einstückige Ausführung vereinfacht zum einen die Fertigung, beispielsweise durch 3D-Druck. Auf der anderen Seite verbessert sich durch die einstückige Ausführung die Dichtheit nach außen, da die Anzahl der mit dem Prozessfluid in Berührung stehenden Teile reduziert wird. Ein vorteilhaftes Beispiel zeichnet sich dadurch aus, dass ein lichter Querschnitt der jeweiligen Durchflusskammer lotrecht zur Absperrachse größer dimensioniert ist als entlang der Absperrachse.

Vorteilhaft verringert sich so der zum Schließen des Ventilkörpers notwendige Stellweg des Kompressors. Zum anderen ergeben sich dadurch im Bereich des Absperrabschnitts gegenüberliegende Anlageflächen der Durchflusskammer, die einfacher aufeinandergepresst den Durchfluss absperren können. Weitergehend erlaubt diese Dimensionierung der Durchflusskammern, dass ein lichter Querschnitt des Ventilkörpers im Bereich des Absperrabschnitts auf den lichten Querschnitt im Bereich der Anschlüsse konstruktiv eingestellt werden kann.

Die Form der Durchflusskammern bzw. eine gedachte elliptische Kontur der Gesamtheit der Durchflusskammern verbessert das Regelverhalten des Prozessventils.

Ein vorteilhaftes Beispiel zeichnet sich dadurch aus, dass die jeweilige Durchflusskammer von zwei sich gegenüberliegenden im Querschnitt konvex gekrümmten, insbesondere spitz aufeinander zulaufenden, Anlageflächen begrenzt ist.

Durch die so bereitgestellte schlitzförmige Ausprägung der Durchflusskammern werden Dichtkonturen bereitgestellt, die das Schließverhalten verbessern.

Ein vorteilhaftes Beispiel zeichnet sich dadurch aus, dass die wenigstens eine Trennwand einer zur Absperrachse lotrechten Ebene folgt.

Damit wird der Fluss von Prozessfluid bei geöffnetem Ventilkörper möglichst wenig durch die Trennwand beeinflusst. Wirkt der Kompressor von außen auf den Ventilkörper, dann erfolgt ein Schließen lotrecht zur Durchflussachse.

Ein vorteilhaftes Beispiel zeichnet sich dadurch aus, dass der Ventilkörper eine ungerade Anzahl an Durchflusskammern, insbesondere drei oder fünf Durchflusskammern, umfasst.

Vorteilhaft kann damit eine mittlere größere Durchflusskammer vorgesehen werden, die von zwei oder vier Durchflusskammern umgeben ist. Die ungerade Anzahl von Durchflusskammern ermöglicht eine bauraumoptimierte Ausführung des Ventilkörpers, indem beispielsweise die äußeren Durchflusskammern kleiner gestaltet werden als die zentrale Durchflusskammer.

Zum einen kann damit der somit dicker ausgebildete Bereich der Trennwand im Absperrabschnitt zum sicheren Schließen beitragen. Auf der anderen Seite werden durch die Verjüngung der Trennwand Verwirbelungen des Prozessfluids und damit der Flusswiderstand des Ventilkörpers verringert.

Ein vorteilhaftes Beispiel zeichnet sich dadurch aus, dass die jeweilige Durchflusskammer sich insbesondere in einem zur Absperrachse lotrechten Längsschnitt hin zum Absperrabschnitt zumindest abschnittsweise, insbesondere stetig, aufweitet.

Vorteilhaft wird so der für den Durchfluss zur Verfügung stehende lichte Durchmesser nicht verkleinert. Die Vergrößerung in diesem Längsschnitt kompensiert das Vorsehen der Trennwand. Die stetige Aufweitung verbessert das Strömungsverhalten und reduziert insbesondere den Strömungswiderstand im Vergleich mit einer gestuften Ausführung.

Ein vorteilhaftes Beispiel zeichnet sich dadurch aus, dass ein Verlauf einer distalen Kante der Trennwand einer in Richtung des Absperrabschnitts orientierten konvexen Wölbung folgt.

Vorteilhaft ist damit die Kante in Richtung der Mittenlängsachse bzw. der Flussachse zurückversetzt, was den Fluss des Prozessfluids in die jeweilige sich aufweitende Kammer bzw. aus dieser heraus positiv beeinflusst. Insbesondere ist die Kante damit nahezu quer zur jeweiligen Flussrichtung des Prozessfluids gestellt und reduziert Turbulenzen.

Gemäß einem zweiten Aspekt der Beschreibung wird ein Prozessventil umfassend den Ventilkörper gemäß dem ersten Aspekt bereitgestellt.

Ein vorteilhaftes Beispiel zeichnet sich dadurch aus, dass das Prozessventil umfasst: einen Aufnahmekörper, welche einen Innenraum aufweist, der zumindest abschnittsweise einer im Wesentlichen nicht komprimierten Außenkontur des Ventilkörpers folgt, wobei der Ventilkörper in dem Innenraum des Aufnahmekörpers aufgenommen ist; und einen Ventilantrieb, der starr zu dem Aufnahmekörper angeordnet ist, wobei ein von dem Ventilantrieb angetriebener und entlang der Absperrachse beweglicher Kompressor auf den Absperrabschnitt des Ventilkörpers drückt.

Ein vorteilhaftes Beispiel zeichnet sich dadurch aus, dass das Prozessventil umfasst: einen weiteren Ventilantrieb, der auf der gegenüberliegenden Seite des ersten Antriebs starr zu dem Aufnahmekörper angeordnet ist, wobei ein von dem weiteren Ventilantrieb angetriebener und entlang der Absperrachse beweglicher Kompressor auf den Absperrabschnitt des Ventilkörpers drückt.

Vorteilhaft wird durch den weiteren zweiten Antrieb die Belastung auf den Ventilkörper reduziert.

Gemäß einem dritten Aspekt der Beschreibung wird ein Prozessventil bereitgestellt, wobei das Prozessventil umfassend:
einen Ventilkörper (100) für ein Prozessventil (600), wobei ein Innenraum (102) des Ventilkörpers (100) wenigstens zwei Anschlüsse (104, 106) fluidführend miteinander verbindet, wobei wenigstens eine Trennwand (110, 114) benachbarte Durchflusskammern (108, 112; 112, 116) des Innenraums (102) voneinander separiert, und wobei eine Außenhülle (120) und die wenigstens eine Trennwand (110, 114) zumindest in einem sich im Wesentlichen lotrecht zur einer Absperrachse (A) erstreckenden Absperrabschnitt (122) des Ventilkörpers (100) aus einem flexiblen Material gefertigt sind;
einen Aufnahmekörper (602), welcher einen Innenraum aufweist, der zumindest abschnittsweise einer im Wesentlichen nicht komprimierten Außenkontur des Ventilkörpers (100) folgt, wobei der Ventilkörper (100) in dem Innenraum des Aufnahmekörpers (602) aufgenommen ist; und
einen Ventilantrieb (604), der starr zu dem Aufnahmekörper (602) angeordnet ist, wobei ein von dem Ventilantrieb (604) angetriebener und entlang der Absperrachse (A) beweglicher Kompressor (610) auf den Absperrabschnitt (122) des Ventilkörpers (100) drückt; und
einen weiteren Ventilantrieb, der auf der
gegenüberliegenden Seite des ersten Antriebs (604) starr zu dem Aufnahmekörper (602) angeordnet ist, wobei ein von dem weiteren Ventilantrieb angetriebener und entlang der Absperrachse (A) beweglicher Kompressor auf den Absperrabschnitt (122) des Ventilkörpers (100) drückt.

In der Zeichnung zeigen
- Figur 1: einen Ventilkörper in einer perspektivischen Ansicht;
- Figur 2: den Ventilkörper analog zu Figur 1 in einer teilgeöffneten Ansicht;
- Figuren 3 bis 5: den Ventilkörper in verschiedenen Schnitten;
- Figur 6: den Ventilkörper in einem Prozessventil; und
- Figuren 7 und 8: jeweils einen Kompressor für den Ventilkörper.

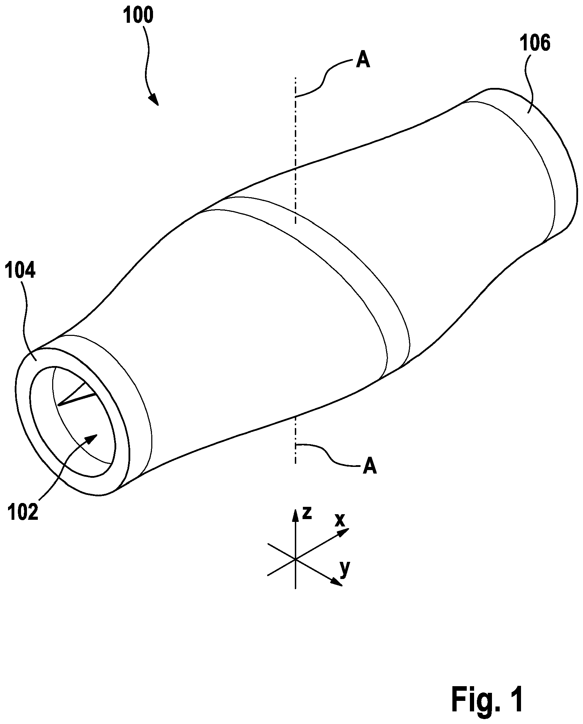

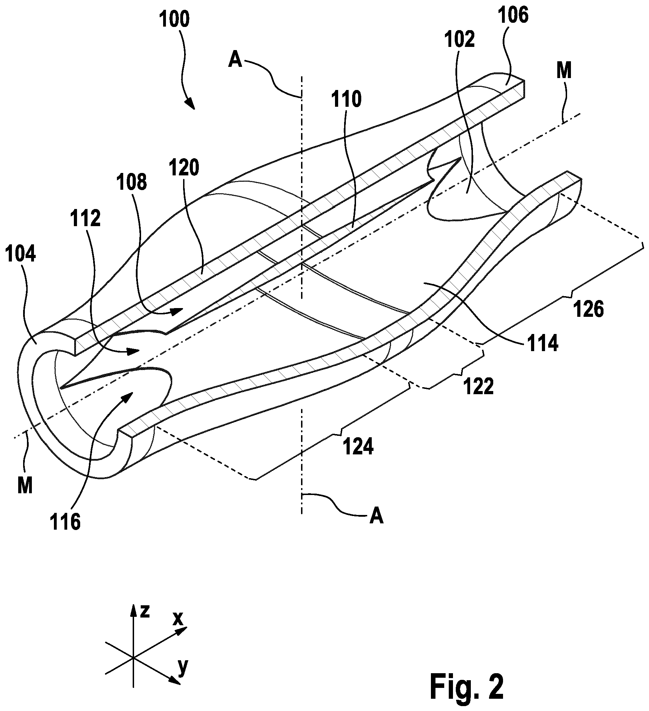

Figuren 1 und 2 zeigen einen schlauchförmigen Ventilkörper 100 für ein Prozessventil 600 in einem entspannten Zustand. Der Ventilkörper 100 ist auch als Schlauchabschnitt bezeichenbar. Ein Innenraum 102 des Ventilkörpers 100 verbindet wenigstens zwei Anschlüsse 104, 106 fluidführend miteinander. Prozessfluid kann also in dem entspannten Zustand von einem Anschluss 104 zum anderen Anschluss 106 fließen. Trennwände 110, 114 separieren benachbarte Durchflusskammern 108, 112 bzw. 112, 116 des Innenraums 102 voneinander. Eine Außenhülle 120 und die wenigstens eine auch als Lamelle bezeichenbare Trennwand 110, 114 sind zumindest in einem sich im Wesentlichen lotrecht zur einer Absperrachse A erstreckenden Absperrabschnitt 122 des Ventilkörpers 100 aus einem flexiblen Material gefertigt.

Der Ventilkörper 100 ist also zumindest in dem Absperrabschnitt 122 oder insgesamt einstückig aus dem flexiblen Material, insbesondere einem Elastomer, gefertigt.

Alternativ kann ein zweites Material vorgesehen werden, um den Ventilkörper gemeinsam mit dem Elastomer bereitzustellen. Beispielsweise sind im Bereich der Anschlüsse 104, 106 Einlagen, welche starrer ausgebildet sind als das flexible Material im Absperrabschnitts 122 vorgesehen, um die Anschlüsse 104, 106 starrer auszubilden und so die Befestigung des Ventilkörpers 100 zu verbessern. Folglich ist der Ventilkörper 100 zumindest in einem proximalen Bereich, der zwischen den Anschlüssen 104 und 106 angeordnet ist, aus dem flexiblen Material gefertigt.

Der Absperrabschnitt 122 ist zwischen zwei Übergangsabschnitten 124 und 126 angeordnet, die in den jeweiligen Anschluss 104, 106 übergehen. Die Übergangsabschnitte 124, 126 umfassen eine jeweilige Geometrieänderung des Innenraums 102 entlang einer Mittenlängsachse M des Ventilkörpers 100 und der darin angeordneten Trennwände 110, 114.

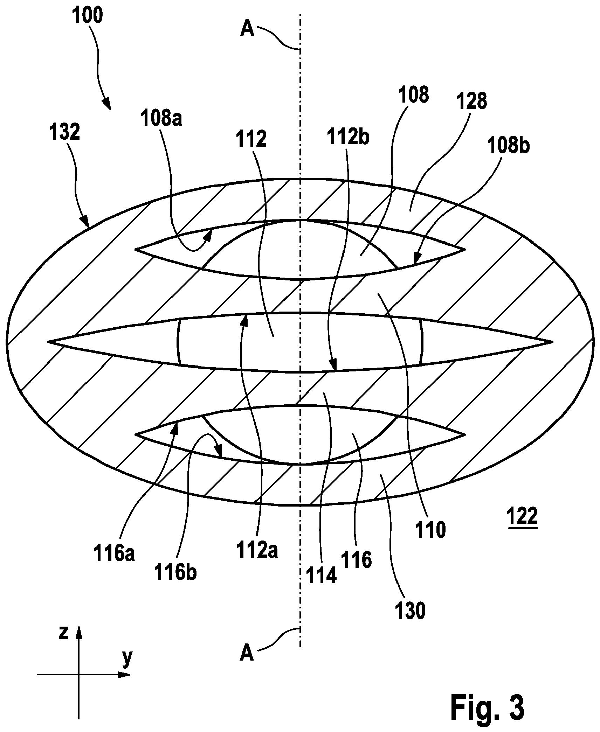

Figur 3 zeigt den Absperrabschnitt 122 des Ventilkörpers 100 in einem yz-Schnitt. Die Durchflusskammern 108, 112, 116 weisen einen gemeinsamen Öffnungsquerschnitt auf, der ähnlich groß ist wie der Öffnungsquerschnitt des jeweiligen Anschlusses 104, 106. Der Ventilkörper 100 umfasst eine ungerade Anzahl an Durchflusskammern 108, 112, 116, insbesondere wie gezeigt eine Anzahl von drei oder in nicht gezeigter Form fünf oder sieben Durchflusskammern. Selbstverständlich kann die Anzahl an Durchflusskammern auch gerade sein.

Ein zur Mittenlängsachse M lotrechter lichter Querschnitt der jeweiligen Durchflusskammer 108, 112, 116 ist lotrecht zur Absperrachse A größer dimensioniert als entlang der Absperrachse A. Die jeweilige Durchflusskammer 108, 112, 116 ist von zwei sich gegenüberliegenden im Querschnitt konvex gekrümmten, insbesondere spitz aufeinander zulaufenden, Anlageflächen 108a-b, 112a-b, 116a-b begrenzt. Die sich jeweils innerhalb der jeweiligen Durchflusskammer 108, 112, 116 gegenüberliegenden Anlageflächen 108a-b, 112a-b, 116a-b treffen im Querschnitt in einem Winkel von kleiner 50°, insbesondere von kleiner 40° und größer 10°, aufeinander.

Die jeweilige Trennwand 110, 114 folgt einer jeweiligen zur Absperrachse A lotrechten Ebene. Die nach außen hin angeordneten Durchflusskammern 108 und 116 werden durch die jeweilige Trennwand 110, 114 und durch eine Außenwand 128, 130 begrenzt. Die mittig angeordnete Durchflusskammer 112 wird durch die Trennwände 110 und 114 begrenzt.

Eine Außenkontur 132 des Absperrabschnitts 122 folgt im gezeigten Schnitt einer Ellipse, wobei eine Hauptachse der Ellipse lotrecht zur Absperrachse A verläuft.

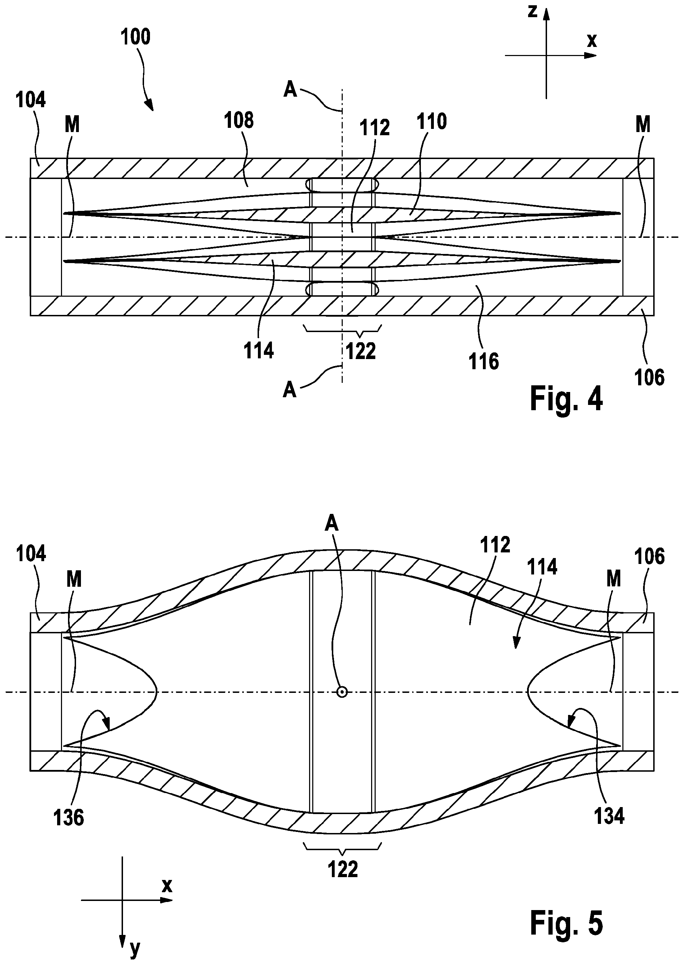

Figur 4 zeigt in einem Längsschnitt entlang der Mittenlängsachse M und entlang der Absperrachse A den Ventilkörper 100. Die wenigstens eine Trennwand 110, 114 verjüngt sich in einem Längsschnitt, in dem die Absperrachse A liegt, ausgehend vom Absperrabschnitt 122 zumindest abschnittsweise. Die Durchflusskammer 108, 112, 116 vergrößert sich entlang bzw. parallel zur Mittenlängsachse M ausgehend von dem Absperrabschnitt 122. Die Durchflusskammer 108, 112, 116 verjüngt sich in einem Querschnitt entlang oder parallel zur Absperrachse A nach außen hin.

Figur 5 zeigt in einem Längsschnitt lotrecht zur Absperrachse A den Ventilkörper 100. Die jeweilige Durchflusskammer 108, 112, 116 weitet sich insbesondere in einem zur Absperrachse A lotrechten Längsschnitt hin zum Absperrabschnitt 122 zumindest abschnittsweise, insbesondere stetig, auf.

Ein Verlauf einer jeweiligen distalen Kante 134, 136 der Trennwand 110, 114 folgt jeweils einer in Richtung des Absperrabschnitts 122 orientierten konvexen Wölbung.

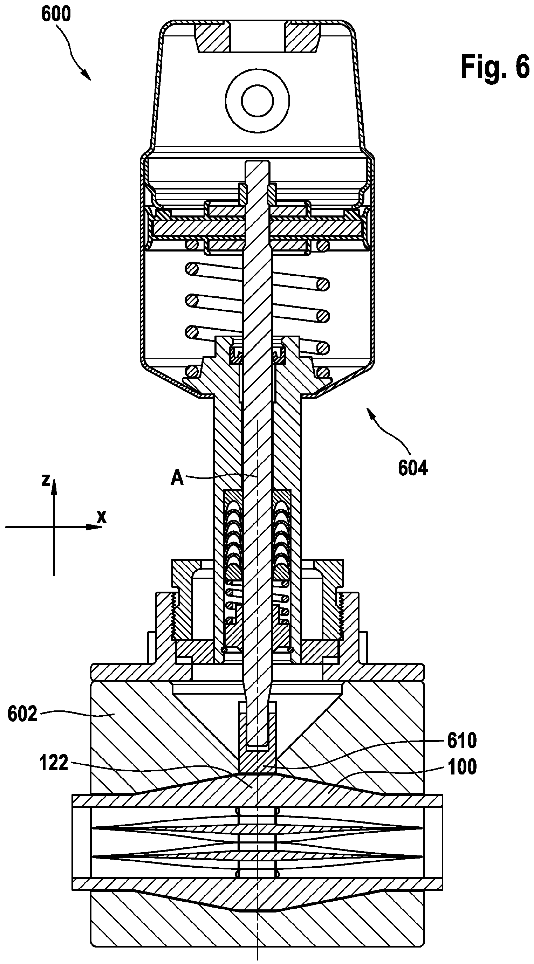

Figur 6 zeigt in einem Schnitt das Prozessventil 600. Ein Aufnahmekörper 602 weist einen Innenraum, der zumindest abschnittsweise einer im Wesentlichen nicht komprimierten Außenkontur des Ventilkörpers 100 folgt, wobei der Ventilkörper 100 in dem Innenraum des Aufnahmekörpers 602 aufgenommen ist. Ein vorliegend pneumatisch ausgebildeter erster Ventilantrieb 604 ist starr mit dem Aufnahmekörper 602 verbunden. Selbstverständlich kann auch ein anderes Antriebsprinzip wie beispielsweise ein elektrischer oder magnetischer Antrieb zum Einsatz kommen. Ein von dem Ventilantrieb 604 angetriebener und entlang der Absperrachse A beweglicher Kompressor 610 drückt auf den Absperrabschnitt 122 des Ventilkörpers 100 und verschließt damit den Ventilkörper 100. Zum Öffnen des Ventilkörpers 100 zieht der Kompressor 610 an dem Ventilkörper 100 in Richtung des zugeordneten Antriebs.

Ein vorliegend nicht gezeigter weiterer Ventilantrieb ist auf der gegenüberliegenden Seite des ersten Antriebs 604 starr zu dem Aufnahmekörper 602 festgelegt. Ein von dem weiteren Ventilantrieb angetriebener und entlang der Absperrachse A beweglicher Kompressor drückt auf den Absperrabschnitt 122 des Ventilkörpers 100 und verschließt gemeinsam mit dem Kompressor 610 damit den Ventilkörper 100. Zum Verschließen und Öffnen des Absperrabschnitts 122 werden also der Kompressor 610 und der weitere Kompressor gleichzeitig betätigt.

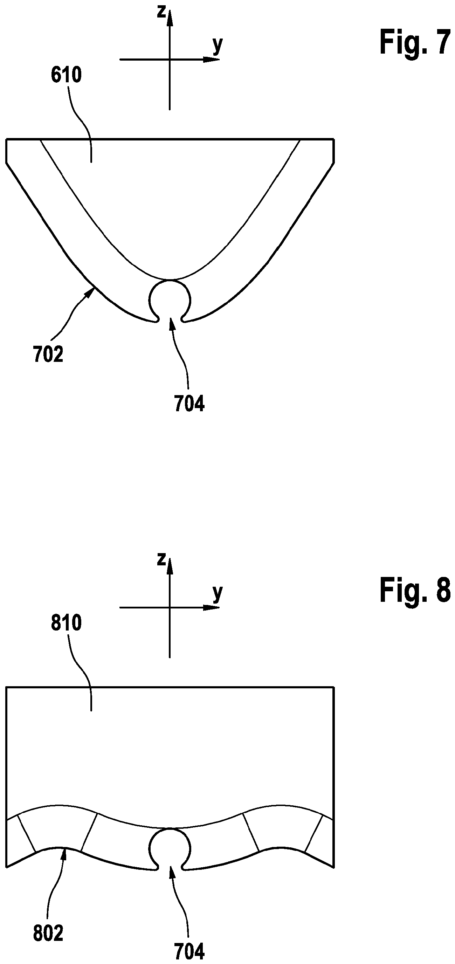

Figur 7 zeigt den Kompressor 610 aus Figur 6 in einer Draufsicht entlang bzw. parallel zur Mittenlängsachse des Ventilkörpers. Eine Anlagekontur 702 zum Anliegen an einem Abschnitt der Außenkontur des Absperrabschnitts des Ventilkörpers ist konvex gekrümmt und zum Betreiben des Ventilkörpers mittels des einseitig angeordneten Antriebs aus Figur 6 geeignet. Die Anlagekontur 702 folgt beispielsweise einer Parabel. Der Ventilkörper weist im Bereich des Absperrabschnitts eine Anschlusskontur auf, die in einer Ausnehmung 704 des Kompressors 610 angeordnet ist. Die Anschlusskontur für ein Schnellwechselsystem kann abweichend von der im Querschnitt kreisförmigen Kontur auch einen Bajonettverschlussabschnitt, ein Gewinde, eine andere Formschlusskontur, einen Knopf oder einen pilzförmigen Pilzkopf aufweisen.

Figur 8 zeigt einen Kompressor 810 als Alternative zu dem Kompressor 610 aus Figur 6 in einer Draufsicht entlang. bzw. parallel zur Mittenlängsachse des Ventilkörpers. Eine Anlagekontur 802 folgt einer W-Form, wobei im Bereich der Ausnehmung 704 die Anlagekontur 702 in Richtung des Ventilkörpers hervorsteht. Der Kompressor 810 ist zum Betreiben des Ventilkörpers mittels zweier sich gegenüberliegend angeordneter Antriebe geeignet.

## Patentansprüche

1. Ein Ventilkörper (100) für ein Prozessventil (600), wobei ein Innenraum (102) des Ventilkörpers (100) wenigstens zwei Anschlüsse (104, 106) fluidführend miteinander verbindet, wobei wenigstens eine Trennwand (110, 114) benachbarte Durchflusskammern (108, 112; 112, 116) des Innenraums (102) voneinander separiert, und wobei eine Außenhülle (120) und die wenigstens eine Trennwand (110, 114) zumindest in einem sich im Wesentlichen lotrecht zur einer Absperrachse (A) erstreckenden Absperrabschnitt (122) des Ventilkörpers (100) aus einem flexiblen Material gefertigt sind, **dadurch gekennzeichnet, dass** die wenigstens eine Trennwand (110, 114) sich in einem Längsschnitt, in dem die Absperrachse (A) liegt, ausgehend vom Absperrabschnitt (122) zumindest abschnittsweise verjüngt.

2. Der Ventilkörper (100) gemäß dem Anspruch 1, wobei der Ventilkörper (100) wenigstens in einem proximalen Bereich zwischen den beiden Anschlüssen (104, 106), insbesondere einstückig, aus dem flexiblen Material, insbesondere einem Elastomer, gefertigt ist.

3. Der Ventilkörper (100) gemäß dem Anspruch 1, wobei ein lichter Querschnitt der jeweiligen Durchflusskammer (108, 112, 116) lotrecht zur Absperrachse (A) größer dimensioniert ist als entlang der Absperrachse (A).

4. Der Ventilkörper (100) gemäß dem Anspruch 1 oder 2, wobei die jeweilige Durchflusskammer (108, 112, 116) von zwei sich gegenüberliegenden im Querschnitt konvex gekrümmten, insbesondere spitz aufeinander zulaufenden, Anlageflächen (108a-b, 112a-b, 116a-b) begrenzt ist.

5. Der Ventilkörper (100) gemäß einem der vorigen Ansprüche, wobei die wenigstens eine Trennwand (110, 114) einer zur Absperrachse (A) lotrechten Ebene folgt.

6. Der Ventilkörper (100) gemäß einem der vorigen Ansprüche, wobei der Ventilkörper (100) eine ungerade Anzahl an Durchflusskammern (108, 112, 116), insbesondere drei oder fünf Durchflusskammern, umfasst.

7. Der Ventilkörper (100) gemäß einem der vorigen Ansprüche, wobei die jeweilige Durchflusskammer (108, 112, 116) sich insbesondere in einem zur Absperrachse (A) lotrechten Längsschnitt hin zum Absperrabschnitt (122) zumindest abschnittsweise, insbesondere stetig, aufweitet.

8. Der Ventilkörper (100) gemäß einem der vorigen Ansprüche, wobei ein Verlauf einer distalen Kante (134, 136) der Trennwand (110, 114) einer in Richtung des Absperrabschnitts (122) orientierten konvexen Wölbung folgt.

9. Ein Prozessventil (600) umfassend den Ventilkörper (100) gemäß einem der vorigen Ansprüche.

10. Ein Prozessventil (600) umfassend:
- einen Ventilkörper (100) gemäß einem der Ansprüche 1 bis 8;
- einen Aufnahmekörper (602), welcher einen Innenraum aufweist, der zumindest abschnittsweise einer im Wesentlichen nicht komprimierten Außenkontur des Ventilkörpers (100) folgt, wobei der Ventilkörper (100) in dem Innenraum des Aufnahmekörpers (602) aufgenommen ist;
- einen Ventilantrieb (604), der starr zu dem Aufnahmekörper (602) angeordnet ist, wobei ein von dem Ventilantrieb (604) angetriebener und entlang der Absperrachse (A) beweglicher Kompressor (610) auf den Absperrabschnitt (122) des Ventilkörpers (100) drückt; und
- einen weiteren Ventilantrieb, der auf der gegenüberliegenden Seite des ersten Antriebs (604) starr zu dem Aufnahmekörper (602) angeordnet ist, wobei ein von dem weiteren Ventilantrieb angetriebener und entlang der Absperrachse (A) beweglicher Kompressor auf den Absperrabschnitt (122) des Ventilkörpers (100) drückt.

## Claims

1. A valve body (100) for a process valve (600), wherein an inner space (102) of the valve body (100) connects at least two ports (104, 106) for fluid flow, wherein at least one partition (110, 114) separates adjacent flow chambers (108, 112; 112, 116) of the inner space (102) from one another, and wherein an outer shell (120) and the at least one partition (110, 114) are made, at least in a blocking portion (122) of the valve body (100) extending substantially perpendicularly to a blocking axis (A), from a flexible material, **characterized in that** the at least one partition (110, 114) tapers, at least in part, in a longitudinal section in which the blocking axis (A) lies, starting from the blocking portion (122).

2. The valve body (100) according to claim 1, wherein the valve body (100) is made of the flexible material, in particular an elastomer, at least in a proximal region between the two ports (104, 106), in particular in one piece.

3. The valve body (100) according to claim 1, wherein an open cross section of the particular flow chamber (108, 112, 116) is dimensioned larger perpendicular to the blocking axis (A) than along the blocking axis (A).

4. The valve body (100) according to claim 1 or 2, wherein the particular flow chamber (108, 112, 116) is delimited by two opposing contact surfaces (108a-b, 112a-b, 116a-b) which are convexly curved in cross-section, in particular which taper toward one another in a pointed manner.

5. The valve body (100) according to any of the preceding claims, wherein the at least one partition (110, 114) follows a plane perpendicular to the blocking axis (A).

6. The valve body (100) according to any of the preceding claims, wherein the valve body (100) comprises an odd number of flow chambers (108, 112, 116), in particular three or five flow chambers.

7. The valve body (100) according to any of the preceding claims, wherein the particular flow chamber (108, 112, 116) widens toward the blocking portion (122), at least in part, in particular continuously, in particular in a longitudinal section perpendicular to the blocking axis (A).

8. The valve body (100) according to any of the preceding claims, wherein a course of a distal edge (134, 136) of the partition (110, 114) follows a convex curvature oriented toward the blocking portion (122).

9. A process valve (600) comprising the valve body (100) according to any of the preceding claims.

10. A process valve (600) comprising:
- a valve body (100) according to any of claims 1 to 8;
- a receiving body (602), which has an inner space that at least partially follows a substantially non-compressed outer contour of the valve body (100), wherein the valve body (100) is accommodated in the inner space of the receiving body (602);
- a valve drive (604) which is arranged rigidly with respect to the receiving body (602), wherein a compressor (610) which is driven by the valve drive (604) and is movable along the blocking axis (A) presses on the blocking portion (122) of the valve body (100); and
- a further valve drive which is arranged rigidly with respect to the receiving body (602) on the opposite side of the first drive (604), wherein a compressor which is driven by the further valve drive and is movable along the blocking axis (A) presses on the blocking portion (122) of the valve body (100).

## Revendications

1. Corps de soupape (100) pour une soupape de processus (600), dans lequel un espace intérieur (102) du corps de soupape (100) relie au moins deux raccords (104, 106) l'un à l'autre de manière conductrice de fluide, dans lequel au moins une cloison (110, 114) sépare l'une de l'autre des chambres d'écoulement adjacentes (108, 112; 112, 116) de l'espace intérieur (102), et dans lequel une enveloppe extérieure (120) et ladite au moins une cloison (110, 114) sont réalisées à partir d'un matériau flexible au moins dans une section d'obturation (122) du corps de soupape (100), laquelle s'étend pour l'essentiel perpendiculairement à un axe d'obturation (A), **caractérisé par le fait que** ladite au moins une cloison (110, 114) se rétrécit au moins par sections, à partir de ladite section d'obturation (122), dans une section longitudinale dans laquelle se trouve l'axe d'obturation (A).

2. Corps de soupape (100) selon la revendication 1, dans lequel le corps de soupape (100) est réalisé, en particulier en une seule pièce, à partir du matériau flexible, en particulier d'un élastomère, au moins dans une région proximale située entre les deux raccords (104, 106).

3. Corps de soupape (100) selon la revendication 1, dans lequel une section transversale libre de la chambre d'écoulement respective (108, 112, 116), perpendiculaire à l'axe d'obturation (A), est dimensionnée de manière plus grande que le long de l'axe d'obturation (A).

4. Corps de soupape (100) selon la revendication 1 ou 2, dans lequel la chambre d'écoulement respective (108, 112, 116) est délimitée par deux surfaces d'appui (108a-b, 112a-b, 116a-b) opposées qui sont courbées de manière convexe en coupe transversale, en particulier s'effilent l'une vers l'autre.

5. Corps de soupape (100) selon l'une quelconque des revendications précédentes, dans lequel ladite au moins une cloison (110, 114) suit un plan perpendiculaire à l'axe d'obturation (A).

6. Corps de soupape (100) selon l'une quelconque des revendications précédentes, dans lequel le corps de soupape (100) comprend un nombre impair de chambres d'écoulement (108, 112, 116), en particulier trois ou cinq chambres d'écoulement.

7. Corps de soupape (100) selon l'une quelconque des revendications précédentes, dans lequel la chambre d'écoulement respective (108, 112, 116) s'élargit au moins par sections, en particulier en continu, en particulier dans une section longitudinale perpendiculaire à l'axe d'obturation (A), vers la section d'obturation (122).

8. Corps de soupape (100) selon l'une quelconque des revendications précédentes, dans lequel un tracé d'un bord distal (134, 136) de la cloison (110, 114) suit une courbure convexe orientée en direction de la section d'obturation (122).

9. Soupape de processus (600) comprenant le corps de soupape (100) selon l'une quelconque des revendications précédentes.

10. Soupape de processus (600) comprenant:
- un corps de soupape (100) selon l'une quelconque des revendications 1 à 8;
- un corps de réception (602) qui présente un espace intérieur qui suit au moins par sections un contour extérieur sensiblement non comprimé du corps de soupape (100), dans lequel le corps de soupape (100) est logé dans l'espace intérieur du corps de réception (602);
- un entraînement de soupape (604) qui est disposé de manière rigide par rapport au corps de réception (602), dans lequel un compresseur (610) qui est entraîné par l'entraînement de soupape (604) et est mobile le long de l'axe d'obturation (A) appuie sur la section d'obturation (122) du corps de soupape (100); et
- un autre entraînement de soupape qui est disposé de manière rigide par rapport au corps de réception (602), du côté opposé au premier entraînement (604), dans lequel un compresseur qui est entraîné par l'autre entraînement de soupape et est mobile le long de l'axe d'obturation (A) appuie sur la section d'obturation (122) du corps de soupape (100).
